# EUROPÄISCHE PATENTANMELDUNG

(11) **EP 4 810 150 A1**
(43) Veröffentlichungstag der Anmeldung: **23.09.2026**
(21) Anmeldenummer: 25164924.0
(22) Anmeldetag: 20.03.2025
(51) Int. Cl.: B01J 8/02

(54) **VERFAHRENSTECHNISCHE ANORDNUNG UND ZUGEHÖRIGES BETRIEBSVERFAHREN**

(71) Anmelder: Linde GmbH, 82049 Pullach (DE)
(72) Erfinder: Hilz, Jochen, 82049 Pullach (DE); Müller-Thorwart, Ole, 82049 Pullach (DE); Dittmar, Benjamin, 82049 Pullach (DE)
(74) Vertreter: Fischer, Werner

(57) **Zusammenfassung**

Es wird eine Anordnung (100) vorgeschlagen, als Teil derer eine Wandung (11) bereitgestellt ist, die innenseitig mit einer temperaturbeständigen Auskleidung (12) versehen und außenseitig gegenüber einem Außenraum (19) exponiert ist, wobei der Außenraum (19) gegenüber einer Umgebung thermisch unisoliert ist, die Anordnung (100) im Freien aufgestellt ist, und in dem Außenraum (19) ein oder mehrere, zur Einstrahlung von Strahlungswärme auf die Wandung (11) eingerichtete Heizelemente (20) bereitgestellt sind. Ein entsprechendes Verfahren wird ebenfalls vorgeschlagen.

## Beschreibung

### Gebiet

Die vorliegende Offenbarung betrifft eine verfahrenstechnische Anordnung, insbesondere eine Reaktoranordnung, und ein Verfahren zum Betreiben einer entsprechenden Anordnung.

### Hintergrund

Bestimmte Einrichtungen in verfahrenstechnischen Anlagen, wie beispielsweise Rohrleitungen, Reaktoren oder andere Apparate, können in bestimmten Fällen oder Betriebszuständen erwärmt oder warmgehalten werden.

Hierbei kann insbesondere eine sogenannte elektrische Begleitheizung eingesetzt werden. Beispielsweise kann eine Prozessbegleitheizung zur Vermeidung von (lokaler) Kondensation dienen. Eine Winterbegleitheizung dient zur Vermeidung von Frostschäden oder der Unterschreitung von zulässigen Materialtemperaturen. Mittels einer Materialbegleitheizung kann ein Material oberhalb einer bestimmten Temperatur gehalten werden, wenn dieses isoliert werden kann. Es existieren unterschiedliche Anbieter von Begleitheizungskabeln und Begleitheizungskabel für unterschiedliche Bauarten und Betriebstemperaturen.

Neben einer lokalen Begleitheizung von einzelnen Rohrleitungen oder Apparaten ist auch die Unterbringung in einem Gebäude wie einer Halle oder einer Einhausung mit entsprechender Klimatisierung möglich. Derartige Maßnahmen sind jedoch mit entsprechenden Kosten verbunden und daher meist nachteilig. Sie sind ausdrücklich nicht von den vorgeschlagenen Lösungen umfasst.

Bestimmte Apparate, beispielsweise mit feuerfestem Material ausgekleidete Reaktoren, können sinnvollerweise nicht mit einer Begleitheizung ausgestattet und isoliert werden. Entsprechende Reaktoren müssen einen gewissen Wärmetransfer von der Reaktorwand an die Umgebung oder ein Kühlmedium gewährleisten, um die Reaktorwand in einem zulässigen Temperaturbereich zu halten. Eine Außenisolierung ist daher nicht möglich, weil die Reaktorwand dann überhitzen würde. Zusätzlich existieren Verfahren zur Temperaturüberwachung (z.B. unter Verwendung einer Farbumschlagfarbe oder von Kamerasystemen, beispielsweise mit Infrarotkameras), die bei einer Außenisolierung nicht korrekt funktionieren würden. Entsprechendes gilt auch für Teile von Reaktoren, Reaktoren zugeordnete Leitungssysteme und andere, insbesondere beheizte, verfahrenstechnische Anordnungen wie unten erläutert.

Auch derartige Anordnungen sollten jedoch entsprechend warmgehalten werden können, wie weiter unten im Detail erläutert.

### Übersicht

Vor diesem Hintergrund werden eine verfahrenstechnische Anordnung, insbesondere eine Reaktoranordnung, und ein Verfahren zum Betreiben einer entsprechenden Anordnung mit den Merkmalen der unabhängigen Patentansprüche vorgeschlagen. Ausgestaltungen sind Gegenstand der abhängigen Patentansprüche und der nachfolgenden Beschreibung.

Als Teil der Anordnung ist eine Wandung bereitgestellt, die innenseitig mit einer temperaturbeständigen Auskleidung ausgestattet und außenseitig gegenüber einem Außenraum exponiert ist, wobei der Außenraum gegenüber einer Umgebung thermisch unisoliert ist, die Anordnung also im Freien aufgestellt ist, und in dem Außenraum ein oder mehrere, zur Einstrahlung von Strahlungswärme auf die Wandung eingerichtete Heizelemente bereitgestellt sind. Insbesondere kann die Anordnung einen Reaktor aufweisen, wobei die Wandung eine Reaktorwand des Reaktors ist.

Unter einer Aufstellung "im Freien" sei dabei insbesondere eine Anordnung außerhalb einer Halle verstanden, was aber beispielsweise eine Überdachung nicht ausschließt. Insbesondere ist die Anordnung nicht, oder nicht allseitig, mit weiteren Wänden, insbesondere nicht mit Gebäudewänden, umschlossen.

Neben einem Reaktor kann eine hier betrachtete verfahrenstechnische Anordnung auch in Form einer Anordnung mit einer oder mit mehreren Rohrleitungen, die bei hohen Temperaturen betrieben werden und mit einer Innenisolierung ausgestattet sind, z.B. einer oder mehrerer Leitungen von einem Autothermreformer zu einem Prozessgaskühler, bereitgestellt sein. Hier vorgeschlagene Ausgestaltungen können auch beispielsweise einen sogenannten kalten Sammler eines Dampfreformers, der heißes Synthesegas einzelner Reformerrohre sammelt, oder einen Wärmeaustauscher mit Innenisolierung, z.B. eine Vorkammer eines Prozessgaskühlers, betreffen. Allgemein kann die betrachtete verfahrenstechnische Anordnung für einen Betrieb auf einem Temperaturniveau von mehr als 300, 500, 800, 1000 oder 1500 °C und bis zu 2.000 °C eingerichtet sein.

Die Heizelemente können für einen elektrischen, insbesondere einen rein elektrischen Betrieb eingerichtet sein. Hierunter soll verstanden sein, dass die Strahlungswärme zum überwiegenden Teil, bevorzugt aber ausschließlich unter Verwendung von elektrischer Energie erzeugt wird, beispielsweise indem Heizschlangen, Heizfilamente in Infrarotstrahlern und dergleichen zur Erzeugung von Wärme mit einem elektrischen Strom durchströmt werden. In alternativen Ausgestaltungen können auch teilweise oder vollständig unter Verwendung eines Brenngases betriebene Heizelemente vorgesehen sein, bei denen beispielsweise durch Verbrennung eines beliebigen geeigneten Gases eine Heizkeramik erwärmt wird, die die Strahlungswärme bereitstellt.

Bei verfahrenstechnischen Anordnungen mit feuerfester Auskleidung, wie sie Gegenstand der vorliegenden Offenbarung sind, d.h. mit einer Isolierung von innen, ist eine Isolierung von außen und damit eine Materialbegleitheizung oft kontraproduktiv, da, wie eingangs erwähnt, die Wandung im Betrieb überhitzen könnte oder die Temperatur der Wandung nicht ohne weiteres überwacht werden kann. Die Wahl von temperaturgeeigneten Materialien ist mit hohen Kosten verbunden. In der vorgeschlagenen Anordnung werden diese Probleme durch die Verwendung einer kontaktlosen Strahlungsbeheizung der Wandung überwunden.

Nachfolgend werden Aspekte der vorliegenden Offenbarung insbesondere unter Bezugnahme auf Reaktoranordnungen beschrieben, wobei dies jedoch nur als nicht einschränkendes Beispiel betrachtet werden soll und die jeweiligen Erläuterungen auch für andere verfahrenstechnische Anordnungen gelten.

Entsprechende Reaktoren sind üblicherweise für einen Druckbetrieb, d.h. einen Betrieb mit einem Druck im Inneren, der oberhalb des Atmosphärendrucks liegt, ausgelegt. Diesem Druckbetrieb ist eine Mindestauslegungstemperatur zugeordnet, die beim Druckbetrieb nicht, nicht übermäßig und/oder nicht über längere Zeiträume unterschritten werden darf. Bei einem drucklosen Standbybetrieb, bei dem der Druck im Inneren bei Atmosphärendruck liegt, können auch niedrigere Materialtemperaturen zulässig sein. Somit können unterschiedliche Temperaturgrenzen für den Druckbetrieb und den drucklosen Betrieb definiert sein. Ein erster minimaler Temperaturwert ist dabei die Mindestauslegungstemperatur bei Druckbetrieb und ein zweiter Temperaturwert die Mindesttemperatur im drucklosen Betrieb. Der zweite Temperaturwert darf niemals unterschritten werden, d.h. muss stets unterhalb der minimalen Umgebungstemperatur liegen oder gleich dieser sein. In bestimmten Fällen kann eine Definition des zweiten Temperaturwerts auch fehlen. Der erste Temperaturwert darf größer als die minimale Umgebungstemperatur sein, da durch das oder die Heizelemente die Materialtemperatur erhöht werden kann, bis der zweite Temperaturwert erreicht ist und der Reaktor druckbeaufschlagt werden kann.

Die vorgeschlagene Lösung ist insbesondere auch deshalb vorteilhaft, weil eine Beheizung von der Innenseite des Reaktors (z.B. mit einem warmen Medium) ohne Druckaufbau problematisch sein kann. Diese kann jedoch erfolgen, nachdem die Erwärmung über das oder die Heizelemente in ausreichendem Umfang erfolgt ist. Beispielsweise kann die minimale Umgebungstemperatur oder tiefste Tagesmitteltemperatur (engl. Lowest One Day Mean Ambient Temperature, LODMAT), in der Arktis bei unter -29 °C liegen. In derartigen Situationen kann die Reaktoranordnung ggf. nicht mehr aus dem kalten Zustand hochgefahren werden, wenn beispielsweise eine Druckbeaufschlagung oder jegliche Belastung des Materials bei Materialtemperaturen unterhalb der minimalen Auslegungstemperatur bei Druckbetrieb untersagt ist. Im Falle einer Abschaltung der Reaktoranordnung kühlen die Reaktoren auf Umgebungstemperatur ab, wenn keine Heizquelle vorhanden ist.

In einer vorgeschlagenen Anordnung kann das eine oder kann zumindest eines der mehreren Heizelemente eine Heizleistung von 1 bis 50 kW aufweisen. Derartige Werte überschreiten jene von typischen Raumheizungen und ermöglichen eine rasche und effektive Erwärmung der Wandung.

In bestimmten Ausgestaltungen kann die vorgeschlagene Anordnung als Reaktoranordnung zur Autothermreformierung und/oder Partialoxidation ausgebildet oder einer derartigen Reaktoranordnung zugeordnet sein, wie bereits erwähnt. Entsprechende Reaktoranordnungen sind in der erläuterten Weise ausgebildet und profitieren daher besonders von den vorgeschlagenen Maßnahmen.

In der vorgeschlagenen Anordnung kann diese, wie bereits angesprochen, eine zulässige minimale Auslegungstemperatur für einen Regelbetrieb, insbesondere für einen Druckbetrieb, aufweisen, die oberhalb einer Minimaltemperatur oder tiefsten Tagesmitteltemperatur der Umgebung liegt. Diese zulässige minimale Auslegungstemperatur richtet sich insbesondere nach dem Material der Wandung. Die vorgeschlagenen Maßnahmen ermöglichen eine Erwärmung der Wandung und entsprechender Materialien, so dass die genannte zulässige minimale Auslegungstemperatur insbesondere bei der Inbetriebnahme nicht unterschritten wird.

In bestimmten Ausgestaltungen kann die vorgeschlagenen Anordnung Kohlenstoffstahl und/oder Chrom-Molybdänstahl aufweisen, der sonst erforderlichen Edelstahl ersetzt, wodurch bedeutende Kosteneinsparung erzielt werden.

Die vorgesehene Anordnung kann insbesondere für einen Temperierbetrieb in einem Temperierzeitraum und einem Regelbetrieb in einem Regelbetriebszeitraum, der zeitlich nach dem Temperierzeitraum liegt, eingerichtet sein. Der Regelbetrieb kann bei einem Reaktor insbesondere ein Produktionsbetrieb sein, d.h. ein Betrieb, in dem der Reaktor druckbeaufschlagt ist. Entsprechendes gilt für andere verfahrenstechnische Anordnungen.

Der Regelbetrieb kann sich direkt, d.h. ohne einen oder mehrere zwischengeschaltete weitere Betriebsmodi, dem Temperierbetrieb anschließen. Dies kann insbesondere dann der Fall sein, wenn die Anordnung während des Temperierbetriebs bereits druckbeaufschlagt ist. Dies kann beispielsweise dann der Falls sein, wenn ein Reaktor für ein schnelleres Wiederanfahren auf Druck gehalten wird. In diesem Fall können die vorgeschlagenen Maßnahmen eine zu starke Abkühlung, insbesondere unterhalb einer Mindestauslegungstemperatur für den Druckbetrieb, verindern.

In anderen Fällen kann der Temperierbetrieb aber auch ein druckloser Temperierbetrieb sein, bei dem die Anordnung noch nicht druckbeaufschlagt ist. Insbesondere in diesen Fällen kann zwischen dem Temperierzeitraum und dem Regelbetriebszeitraum ein Anfahrbetriebszeitraum zwischengeschaltet sein, wobei in dem Anfahrbetriebszeitraum ein Anfahren vorgenommen wird, während dem eine Druckbeaufschlagung der Anordnung erfolgt.

In dem Temperierbetrieb wird in diesem Fall insbesondere eine ausreichende Temperatur der Anordnung bzw. der Wandung für den nachfolgenden Regelbetrieb eingestellt, so dass eine Druckbeaufschlagung möglich ist. Ein Anfahrbetrieb dient also zur Herstellung der Voraussetzungen für den Regelbetrieb, nachdem eine ausreichende Temperatur im Temperierbetrieb eingestellt wurde. Weitere Zeiträume, oder Teilzeiträume des Temperierzeitraums, können dazu dienen, eine entsprechende Anordnung für beliebige Zeitdauern temperiert zu halten, beispielsweise um Wartungsarbeiten, Dichtigkeitsprüfungen, Katalysatorwechsel und dergleichen durchzuführen.

Der Anfahrbetrieb kann eine Druckbeaufschlagung mit anderen Medien als den im Regelbetrieb verwendeten Medien, beispielsweise Stickstoff, umfassen, nachdem die Anordnung angewärmt wurde. In dem Anfahrbetrieb können auch beispielsweise Brenner in der Anordnung gestartet werden. Die Brenner können beispielsweise Reaktionsrohre in einem Reaktor in der vorgeschlagenen Anordnung erwärmen. Anschließend erfolgt ein Übergang in den Regelbetrieb (z.B. mit Kohlenwasserstoffen).

Der Regelbetrieb kann insbesondere eine Druckbeaufschlagung der Anordung umfassen, beispielsweise auf einen Druck von 20 bis 75 bar. Dies ist erst dann möglich, wenn die minimale Auslegungstemperatur überschritten ist.

In Ausgestaltungen der vorgeschlagenen Anordnung ist diese dafür eingerichtet, die Heizelemente nur in dem Temperierzeitraum, nicht aber in dem Regelbetriebszeitraum, zu betreiben. Die durch die Heizelemente zugeführte Wärme kann dadurch beispielsweise eine in einem Reaktor durchgeführte Reaktion nicht beeinflussen und bleibt auf die notwendigen Zeiträume beschränkt, da im Regelbetriebszeitraum der Reaktor von innen warmgehalten werden kann. In anderen Ausgestaltungen, in denen ein Anfahrbetrieb vorgesehen ist, kann die Anordnung dafür eingerichtet sein, die Heizelemente nur in dem Temperierzeitraum und in dem Anfahrzeitraum, nicht aber in dem Regelbetriebszeitraum, zu betreiben, da hierdurch verhindert werden kann, dass sich die Wandung in dem Anfahrzeitraum wieder abkühlt.

In bestimmten Ausgestaltungen ist die Anordnung dafür eingerichtet, einem Reaktor nur in dem Regelbetrieb, nicht aber in dem Temperierbetrieb und dem Anfahrbetrieb, falls vorgesehen, ein Einsatzgemisch zuzuführen und insbesondere ein Produktgemisch zu entnehmen. Die Anordnung kann in bestimmten Ausgestaltungen dafür eingerichtet sein, den Reaktor nur in dem Regelbetrieb, nicht aber in dem Temperierbetrieb, druckbeaufschlagt zu betreiben und insbesondere in dem Anfahrbetrieb, falls vorgesehen, eine Druckerhöhung vorzunehmen.

Die Anordnung ist in bestimmten Ausgestaltungen dafür eingerichtet, den Anfahrbetrieb so lange durchzuführen, bis eine Temperatur der Wandung oberhalb eines vorgegebenen Schwellwerts liegt. Auf diese Weise wird eine Unterschreitung der minimalen Auslegungstemperatur bei der Druckbeaufschlagung vermieden.

Die Anordnung kann dafür eingerichtet sein, die Temperatur der Wandung messtechnisch zu erfassen, um zu einer erhöhten Sicherheit beim Betrieb der Anordnung zu gelangen.

Der Schwellwert kann in Abhängigkeit von der zulässigen minimalen Auslegungstemperatur vorgegeben werden, wobei auch insbesondere geeignete Sicherheitsabstände oder dynamische Werte verwendbar sind.

In der vorgeschlagenen Anordnung kann das eine oder kann zumindest eines der mehreren Heizelemente eine oder mehrere Heizlampen und/oder Infrarotheizstrahler aufweisen, die in an sich bekannter Weise ausgebildet sein können und in bewährter, erprobter Qualität verfügbar sind.

Das vorgeschlagene Verfahren dient zum Betreiben einer Anordnung mit einer Wandung, die innenseitig mit einer temperaturbeständigen Auskleidung versehen und außenseitig gegenüber einem Außenraum exponiert ist, wobei in dem gegenüber einer Umgebung thermisch unisolierten Außenraum ein oder mehrere Heizelemente bereitgestellt sind, mittels der zumindest zeitweise Wärme auf die Wandung abgestrahlt wird.

Vorteile und Merkmale, die bezüglich der vorgeschlagenen Anordnung und deren Ausgestaltungen beschrieben wurden, gelten auch für das vorgeschlagene Verfahren und umgekehrt. Diese werden entsprechend nur einmalig beschrieben, und auf die jeweiligen Erläuterungen kann verwiesen werden. Entsprechendes gilt auch für Ausgestaltungen des Verfahrens, die die Verwendung einer Anordnung gemäß einer beliebigen Ausgestaltung umfassen können. Die Anordnung kann insbesondere eine Reaktoranordnung sein.

### Zeichnungen

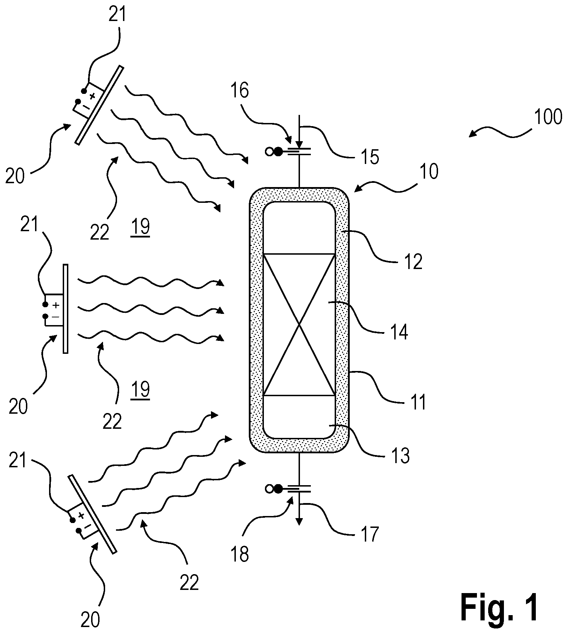

Im Rahmen der vorliegenden Offenbarung vorgeschlagene Aspekte werden anhand der beigefügten Zeichnung näher erläutert. Dabei zeigt die
Figur 1 eine Reaktoranordnung gemäß einer vorgeschlagenen Ausgestaltung.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale nicht abschließend und/oder beschränkend betrachtet werden. Es versteht sich, dass die zuvor und nachfolgend beschriebenen Vorteile, Ausführungsformen, Funktionen, Merkmale, Strukturen und/oder andere Aspekte nicht als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus diesen bestehen, auch wenn solche Kombinationen hier nicht spezifisch beschrieben sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende in ihrer Funktion einander entsprechende, baulich identische oder vergleichbar aufgebaute Elemente, Verfahrensschritte usw. können mit identischen Bezugszeichen angegeben sein.

Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Die im Rahmen der vorliegenden Offenbarung verwendeten Begriffe haben grundsätzlich die in der Fachwelt anerkannten Bedeutungen. So sei zu den hier verwendeten Begriffen auf übliche Fachliteratur verwiesen.

Die vorliegende Offenbarung betrifft die Verwendung von Strahlungsheizelementen bzw. Heizstrahlern zur Strahlungsbeheizung einer Reaktorwand oder einer Wandung in einer anderen verfahrenstechnischen Anordnung. Wie erwähnt, werden vorliegend Aspekte vorgeschlagener Ausgestaltungen insbesondere unter Bezugnahme auf Reaktoranordnungen beschrieben, wobei dies jedoch nur als nicht einschränkendes Beispiel betrachtet werden soll und die jeweiligen Erläuterungen auch für andere verfahrenstechnische Anordnungen gelten.

Der Begriff der Strahlungsbeheizung soll dabei insbesondere eine Wärmeübertragung durch Strahlung über einen Raum zwischen elektrischen Heizelementen und der zu beheizenden Reaktorwand beschreiben. Die Strahlungsbeheizung unterscheidet sich insbesondere von einer direkten elektrischen Beheizung oder Beheizung mit Heizelementen in enge(re)m Kontakt mit der Wand, wie z.B. Heizmanschetten oder Heizdrähte. Die indirekte oder Strahlungsbeheizung ist besonders vorteilhaft, da sie keinen Eingriff in die Reaktorkonstruktion erfordert. Wie zuvor erwähnt, können elektrische und/oder gasbeheizte Strahlungsheizelemente oder Mischformen eingesetzt werden.

Das Anfahren von kalten Anlagen bei sehr kalten Umgebungsbedingungen kann ohne besondere Maßnahmen durchgeführt werden, wenn die minimale Auslegungstemperatur des Materials für einen Druckbetrieb die minimale Umgebungstemperatur abdeckt. Materialien, die für kalte Umgebungsbedingungen ausgelegt sind, werden in der Regel verwendet, wenn kalte Umgebungsbedingungen eine niedrige minimale Auslegungstemperatur für Rohrleitungen und Geräte erfordern. Gängige Materialien sind kohlenstoffarme Stähle oder Edelstahl.

Jedes Material weist eine individuelle zulässige minimale Auslegungstemperatur auf, die vom Auslegungscode (EN, ASME usw.) vorgebene wird. Der Auslegungscode definiert, welcher Mindesttemperatur und welchem Druck das Material bei der Inbetriebnahme oder dem Aufwärmen ausgesetzt werden kann.

Insbesondere bei höheren Temperaturen ablaufende Prozesse, bei denen die Betriebstemperatur über einem bestimmten Wert liegt, oder bei Verwendung bestimmter Medien, besitzt das für diese Bedingungen erforderliche Material jedoch eine begrenzte Mindestauslegungstemperatur (z.B. Chrom-Molybdänstahl bei Kontakt mit Wasserstoff). Häufig ist das Material, das den gesamten Temperaturbereich abdeckt, Edelstahl. Dieser ist jedoch deutlich teurer als Kohlenstoffstahl oder Chrom-Molybdänstahl.

Ein gängiger technischer Ansatz besteht daher darin, das kostengünstigere Material zu verwenden und eine Materialbegleitheizung zu installieren. Diese wird eingeschaltet, wenn der jeweilige Anlagenabschnitt nicht in Betrieb ist, um zu vermeiden, dass das Material bis unter eine Mindestauslegungstemperatur abkühlt.

Bei Reaktoren mit feuerfester Auskleidung, d.h. einer innenliegenden Isolierung, ist eine Außenisolierung und damit eine Materialbegleitheizung oft nicht sinnvoll möglich. Die Gründe wurden bereits erläutert. Hier sind kostenintensive Gehäuse oder Edelstahl die einzigen realistischen Optionen, die zu deutlich höheren Investitionsausgaben führen. Beispielsweise würde die Ausführung eines Resktors in Edelstahl statt in Kohlenstoffstahl zu einer Kostensteigerung von etwa 100% führen. Darüber hinaus kann die Verwendung von Edelstahl auch andere technische Herausforderungen mit sich bringen, wie z.B. unebene Schweißnähte.

Hier vorgeschlagene Ausgestaltungen überwinden diese Probleme durch die Verwendung einer kontaktlosen Strahlungsbeheizung des Reaktormantels, um die Metalltemperatur mithilfe einer Strahlungsheizquelle (beispielsweise Lampe, Infrarotheizung usw.) über der Mindestauslegungstemperatur zu halten.

Figur 1 veranschaulicht in diesem Zusammenhang eine Reaktoranordnung 100 mit einem Reaktor 10, der eine Reaktorwand 11, eine temperaturbeständige Auskleidung 12 und einen Reaktorinnenraum 13 mit einer Reaktionszone 14 aufweist. Über einen Einlass 15 mit einem Einlassschieber 16 kann dem Reaktorinnenraum 13 ein Reaktionseinsatz zugeführt werden. Über einen Auslass 17 mit einem Auslassschieber 18 kann dem Reaktorinnenraum 13 ein Produktgemisch entnommen werden. In dem in Figur 1 veranschaulichten Zustand befindet sich der Reaktor 10 in abgeschaltetem Zustand, d.h. er kann insbesondere über den Einlassschieber 16 und den Auslassschieber 18 abgeschottet sein. Der Reaktor 10 ist von einem Reaktoraußenraum 19 umgegeben.

Teil der Reaktoranordnung 100 sind mehrere Heizstrahler 20 mit einer schematisch veranschaulichten elektrischen Versorgung 21, mittels welcher Strahlungswärme 22 auf die Reaktorwand 11 eingestrahlt werden kann. Die Heizstrahler 20 sind in Figur 1 lediglich aus Gründen der Übersichtlichkeit nur auf der linken Seite des Reaktors 10 dargestellt, können aber in jeglicher geeigneter Weise um den Reaktor 10 herum angeordnet sein. Mittels der Heizstrahler 20 wird eine kostengünstige Lösung bereitgestellt, um den Einsatz kostenintensiver Materialien zu vermeiden, und die Reaktoranordnung 100 dennoch auch bei kalten Umgebungstemperaturen betreiben und insbesondere anfahren zu können.

## Patentansprüche

1. Verfahrenstechnische Anordnung (100), als Teil derer eine Wandung (11) bereitgestellt ist, die innenseitig mit einer temperaturbeständigen Auskleidung (12) versehen und außenseitig gegenüber einem Außenraum (19) exponiert ist, wobei der Außenraum (19) gegenüber einer Umgebung thermisch unisoliert ist, die Anordnung (100) im Freien aufgestellt ist, und in dem Außenraum (19) ein oder mehrere, zur Einstrahlung von Strahlungswärme auf die Wandung (11) eingerichtete Heizelemente (20) bereitgestellt sind.

2. Anordnung (100) nach Anspruch 1, die einen Reaktor (10) aufweist, wobei die Wandung (11) eine Reaktorwand des Reaktors (10) ist, oder die ein Leitungssystem und/oder einen Wärmetauscher mit der Wandung (11) aufweist.

3. Anordnung (100) nach Anspruch 1 oder 2, wobei das eine oder zumindest eine der mehreren Heizelemente (20) eine Heizleistung von 1 bis 50 kW aufweist.

4. Anordnung (100) nach einem der vorstehenden Ansprüche, wobei die Anordnung (100) zur Autothermreformierung und/oder Partialoxidation eingerichtet ist.

5. Anordnung (100) nach einem der vorstehenden Ansprüche, wobei die Wandung (11) ein Material mit einer zulässigen minimalen Auslegungstemperatur für einen Regelbetrieb aufweist, die oberhalb einer Minimaltemperatur oder tiefsten Tagesmitteltemperatur der Umgebung liegt.

6. Anordnung (100) nach Anspruch 5, wobei das Material einen Kohlenstoffstahl und/oder Chrom-Molybdänstahl aufweist.

7. Anordnung (100) nach einem der vorstehenden Ansprüche, die für einen Temperierbetrieb in einem Temperierzeitraum und einen Produktionsbetrieb in einem Regelbetriebszeitraum, der nach dem Temperierzeitraum liegt, eingerichtet ist.

8. Anordnung (100) nach Anspruch 7, bei dem der Temperierbetrieb ein druckloser Temperierbetrieb oder ein Temperierbetrieb unter Druck ist und/oder bei dem zwischen dem Temperierzeitraum und dem Regelbetriebszeitraum ein Anfahrzeitraum zwischengeschaltet ist, in welchem ein Anfahrbetrieb vorgenommen wird, wobei der Anfahrbetrieb eine Druckerhöhung innerhalb der Anordnung (100) und/oder ein Inbetriebsetzen von Brennern innerhalb der Anordnung (100) und/oder eine Einspeisung eines Gases oder Gasgemischs in einen in der Anordnung (100) bereitgestellten Reaktor (10), das mit einem Gas oder Gasgemisch identisch ist, das in dem Regelbetriebszeitraum in den Reaktor (10) eingespeist wird oder von diesem abweicht, vorgenommen wird.

9. Anordnung (100) nach Anspruch 7 oder 8, die dafür eingerichtet ist, die Heizelemente (20) in dem Produktionsbetrieb nicht zu betreiben.

10. Anordnung (100) nach Anspruch einem der Ansprüche 7 bis 9, die dafür eingerichtet ist, einem Reaktor (10) nur in dem Produktionsbetrieb oder nur in dem Produktionsbetrieb und dem Anfahrbetrieb ein Einsatzgemisch zuzuführen.

11. Anordnung (100) nach einem der Ansprüche 7 bis 10, die dafür eingerichtet ist, den Temperierbetrieb so lange durchzuführen, bis eine Temperatur der Wandung oberhalb eines vorgegebenen Schwellwerts liegt.

12. Anordnung (100) nach Anspruch 11, die dafür eingerichtet ist, die Temperatur der Wandung messtechnisch zu erfassen.

13. Anordnung (100) nach Anspruch 11 oder 12, wobei der Schwellwert in Abhängigkeit von der zulässigen minimalen Auslegungstemperatur vorgegeben wird.

14. Anordnung (100) nach einem der vorstehenden Ansprüche, wobei das eine oder zumindest eines der mehreren Heizelemente (20) eine oder mehrere Heizlampen und/oder Infrarotheizstrahler aufweist.

15. Verfahren zum Betreiben einer Anordnung (100), als Teil derer eine Wandung (11) bereitgestellt ist, die innenseitig mit einer temperaturbeständigen Auskleidung (12) versehen und außenseitig gegenüber einem Außenraum (19) exponiert ist, wobei der Außenraum (19) gegenüber einer Umgebung thermisch unisoliert ist, die Anordnung (100) im Freien aufgestellt ist, und in dem Außenraum (19) ein oder mehrere Heizelemente (20) bereitgestellt sind, mittels derer zeitweise Strahlungswärme auf die Wandung (11) eingestrahlt wird.
